# EUROPEAN PATENT APPLICATION

(11) **EP 3 799 039 A1**
(43) Date of publication of application: **31.03.2021**
(21) Application number: 19219812.5
(22) Date of filing: 27.12.2019
(51) Int. Cl.: G10L 15/22, G10L 15/08, G06F 3/16

(54) **SPEECH CONTROL METHOD AND APPARATUS, ELECTRONIC DEVICE, AND READABLE STORAGE MEDIUM**

(30) Priority: 29.09.2019 CN 201910933788
(71) Applicant: Baidu Online Network Technology (Beijing) Co., Ltd., Beijing 100085 (CN)
(72) Inventor: LUO, Yongxi, Beijing, 100085 (CN); WANG, Shasha, Beijing, 100085 (CN)
(74) Representative: Papa, Elisabetta

(57) **Abstract**

The present disclosure discloses a speech control method, a speech control apparatus, an electronic device, and a readable storage medium. The method may be applied to an electronic device, and includes: in a target scenario, controlling the electronic device to operate in a first operation state, and collecting an audio clip based on a wake word in the first operation state; performing speech recognition on the audio clip to obtain a first control intent; performing a first control instruction corresponding to the first control intent, and controlling the electronic device to switch from the first operation state to a second operation state; in the second operation state, continuously collecting audio to obtain an audio stream, and performing speech recognition on the audio stream to obtain a second control intent; and performing a second control instruction corresponding to the second control intent when the second control intent matches the target scenario.

## Description

### TECHNICAL FIELD

The present disclosure relates to the field of speech recognition and artificial intelligent technology, and more particularly to a speech control method, a speech control apparatus, an electronic device, and a readable storage medium.

### BACKGROUND

With constantly development of artificial intelligence technology and terminal technology, artificial intelligence products, such as an intelligent speaker, or other electronic devices, has become increasingly popular. A user may control the electronic device through speech, to control the electronic device to execute a control instruction. In the process of playing games by using the electronic device, the user can interact with the electronic device through speech, when a control instruction inputted by the user is unrelated to the game, the electronic device will switch to other operation scenario in response to the control instruction. In this case, the game is interrupted, the user experience is affected.

### SUMMARY

Embodiments of a first aspect of the present disclosure provide a speech control method. The method may be applied to an electronic device, and includes: in a target scenario, controlling the electronic device to operate in a first operation state, and collecting an audio clip based on a wake word in the first operation state; performing speech recognition on the audio clip to obtain a first control intent; performing a first control instruction corresponding to the first control intent, and controlling the electronic device to switch from the first operation state to a second operation state; in the second operation state, continuously collecting audio to obtain an audio stream, and performing speech recognition on the audio stream to obtain a second control intent; and performing a second control instruction corresponding to the second control intent when the second control intent matches the target scenario.

In an embodiment, the method further includes: performing speech recognition on the audio stream to obtain information stream; obtaining at least one candidate intent based on the information stream; selecting the second control intent matching the target scenario from the at least one candidate intent; and controlling the electronic device to quit the second operation state when the second control intent matching the target scenario is not obtained within a preset period. The preset period ranges from 20 seconds to 40 seconds.

In an embodiment, the method further includes: controlling the electronic device to reject responding to the candidate intent that does not match the target scenario.

In an embodiment, controlling the electronic device to switch from the first operation state to the second operation state includes: replacing a first element with a second element, and displaying a third element. The first element is configured to indicate that the electronic device is in the first operation state, the second element is configured to indicate that the electronic device is in the second operation state, and the third element is configured to prompt inputting the wake word and/or broadcasting an audio or video.

In an embodiment, before controlling the electronic device to switch from the first operation state to the second operation state, the method further includes: determining that the first control intent matches the target scenario.

In an embodiment, the target scenario includes a game scenario.

Embodiments of a second aspect of the present disclosure provide a speech control apparatus. The speech control apparatus may be applied to an electronic device. The apparatus includes an executing module, a first obtaining module, a switching module, a recognizing module, and a control module.

The executing module is configured to, in a target scenario, control the electronic device to operate in a first operation state, and collect an audio clip based on a wake word in the first operation state. The first obtaining module is configured to perform speech recognition on the audio clip to obtain a first control intent. The switching module is configured to perform a first control instruction corresponding to the first control intent, and control the electronic device to switch from the first operation state to a second operation state. The recognizing module is configured to, in the second operation state, continuously collect audio to obtain an audio stream, and perform speech recognition on the audio stream to obtain a second control intent. The control module is configured to perform a second control instruction corresponding to the second control intent when the second control intent matches the target scenario.

Embodiments of a third aspect of the present disclosure provides an electronic device. The device includes: at least one processor and a memory. The memory is coupled to the at least one processor, and configured to store executable instructions. When the instructions are executed by the at least one processor, the at least one processor is caused to execute the speech control method according to embodiments of the first aspect of the present disclosure.

Embodiments of a fourth aspect of the present disclosure provides a non-transitory computer readable storage medium having computer instructions stored thereon. When the computer instructions are executed by a processor, the processor is caused to execute the speech control method according to embodiments of the first aspect of the present disclosure.

The present disclosure may have following advantages and beneficial effects. In the target scenario, the electronic device operates in the first operation state, and the audio clip is collected based on the wake word, speech recognition is performed on the audio clip to obtain the first control intent, the first control instruction matching the first control intent is performed, and the electronic device is controlled to switch from the first operation state to the second operation state. In the second operation state, the audio is collected continuously to obtain the audio stream, speech recognition is performed on the audio stream to obtain the second control intent, and when the second control intent matches the target scenario, the second control instruction matching the second control intent is performed. Thus, when the user continuously interacts with the electronic device, the audio stream may be recognized to obtain the second control intent, when the second control intent matches the target scenario, the second control instruction corresponding to the second control intent is performed, such that the user does not need to input the wake word frequently, the user's operation can be simplified, and user experience can be improved.

Other effects of the above alternative embodiments will be described below in conjunction with detailed embodiments.

### BRIEF DESCRIPTION OF THE DRAWINGS

The accompanying drawings are used to understand the solution better, and do not constitute a limitation for the present disclosure. The above and/or additional aspects and advantages of the present disclosure will become more apparent with reference to the accompanying drawings for describing embodiments below, in which:
FIG. 1 is a flow chart illustrating a speech control method according to an embodiment of the present disclosure;
FIG. 2 is a flow chart illustrating a speech control method according to another embodiment of the present disclosure;
FIG. 3 is a flow chart illustrating a speech control method according to yet another embodiment of the present disclosure;
FIG. 4 is a block diagram illustrating a speech control apparatus according to an embodiment of the present disclosure; and
FIG. 5 is a block diagram illustrating an electronic device according to an embodiment of the present disclosure.

### DETAILED DESCRIPTION

Embodiments of the present disclosure will be described in detail below with reference to the accompanying drawings, the details of embodiments described herein are exemplary. Therefore, the skilled in the art would understand that, various changes and modifications may be made to the embodiments described herein without departing from the scope and spirit of the present disclosure. For clarity and conciseness, descriptions for well-known functions and structures are omitted in the following description.

A speech control method, a speech control apparatus, an electronic device and a readable storage medium according to embodiments of the present disclosure will be described below with reference to the accompanying drawings.

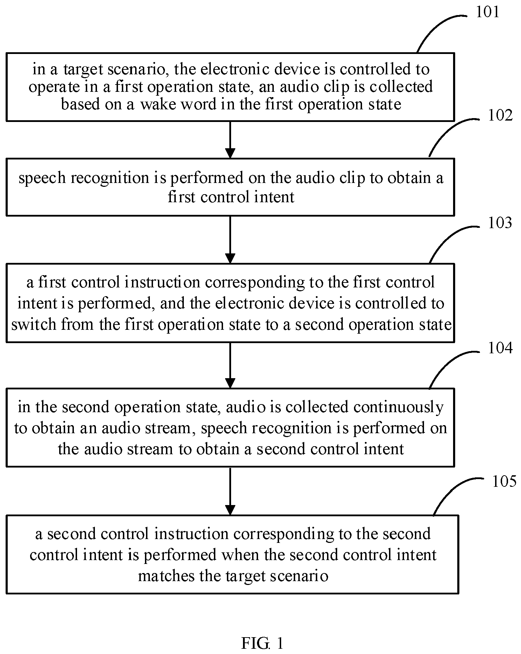

FIG. 1 is a flow chart illustrating a speech control method according to an embodiment of the present disclosure. In an embodiment of the present disclosure, as an example, the speech control method may be applicable to a speech control apparatus. The speech control apparatus may be applied to any electronic device, such that the electronic device can perform the speech control function.

In an embodiment, the electronic device may be a personal computer (PC), a cloud device, a mobile device, an intelligent speaker, etc. The mobile device may be a hardware device having various operating systems, touch screens and/or display screens, such as a telephone, a tablet, a personal digital assistant, a wearable device, an on-vehicle device.

As illustrated in FIG. 1, the speech control method may include the following actions.

At block 101, in a target scenario, the electronic device is controlled to operate in a first operation state, an audio clip is collected based on a wake word in the first operation state.

In an example, the target scenario includes a game scenario. It should be noted that, the target scenario may also be other scenarios, such as a children scenario, which is not limited.

In an embodiment of the present disclosure, the first operation state may be a non-listening state. In the target scenario, the electronic device may operate in the non-listening state, and collect the audio clip according to the wake word inputted by the user.

In an embodiment of the present disclosure, the wake word may be preset based on the built-in program of the electronic device, or the wake word may also be set based on user's requirement, to satisfy the individual needs of users, which is not limited in the present disclosure. For example, when the electronic device is an intelligent speaker, the wake word may be "Xiaodu, Xiaodu".

In an embodiment of the present disclosure, in the target scenario, when the electronic device operates in the first operation state, the electronic device may detect whether the user inputs the wake word, and when the wake word is detected, the audio clip inputted after the wake word may be collected, speech recognition may be performed based on the audio clip. For example, when the electronic device is the intelligent speaker, in the first operation state, when the user inputs "Xiaodu, Xiaodu, playing song A" or "Xiaodu, Xiaodu, I want to listen a song", the intelligent speaker may recognize the audio clip "playing song A" or "I want to listen a song" inputted after the wake word "Xiaodu, Xiaodu".

In an embodiment of the present disclosure, when the electronic device is in the first operation state, a speech control component in the electronic device may monitor the speech input by the user. When it is monitored that the user inputs the wake word, the audio clip input after the wake word may be collected, and speech recognition may be performed based on the audio clip. When it is monitored that the user does not input the wake word, the speech input by the user may be monitored continuously. In other words, when the wake word is not monitored, the electronic device may still be in the first operation state, or the non-listening state. When the user wants to control the electronic device through speech, the user needs to input the wake word. For example, when the user wants to play a song, the user may input "Xiaodu, Xiaodu, I want to listen a song".

At block 102, speech recognition is performed on the audio clip to obtain a first control intent.

In an embodiment of the present disclosure, the first control intent may be preset based on the built-in program of the electronic device, or the first control intent may be set by the user, to improve flexibility and applicability, which is not limited in the present disclosure. For example, in the game scenario, the first control intent may include adding energy, purchasing equipment, etc.

In an embodiment of the present disclosure, in the first operation state, when the electronic device detects that the user inputs the wake word, the audio clip input after the wake word may be collected, and speech recognition may be performed on the audio clip to obtain the first control intent.

For example, in a game scenario, the electronic device operates in the first operation state, when the user wants to change the game equipment, the user may input, for example, "I want to change the equipment" or "changing equipment A" after inputting the wake word "Xiaodu, Xiaodu", then the electronic device may recognize the audio clip, and obtain the first control intent "I want to change the equipment" or "changing equipment A".

At block 103, a first control instruction corresponding to the first control intent is performed, and the electronic device is controlled to switch from the first operation state to a second operation state.

In an embodiment of the present disclosure, the second operation state may be a listening state. When the electronic device is in the listening state, the user does not need to input the wake word, and the user may input speech instructions in real time to interact with the electronic device.

It should be noted that, in the game scenario, when the electronic device is in the listening state, the electronic device may play audio, video and the like continuously without interrupting the game process.

In an embodiment of the present disclosure, the electronic device may perform the control instruction matching the first control intent when the first control intent is acquired. In this case, it indicates that the user has the requirement for interacting with the electronic device in real time or continuously, and then the electronic device may switch from the first operation state to the second operation state.

As an example, the electronic device is an intelligent speaker, the target scenario is the game scenario, when the user inputs "Xiaodu, Xiaodu, adding energy", the intelligent speaker may recognize the audio clip, and determine the intent of the audio clip as "adding energy". In this case, the intelligent speaker may switch from the non-listening state to the listening state, energy may be added to the game role of the user, and after energy addition is complete, the intelligent speaker may inform the user by broadcasting or by displaying a prompt message on the interface, such as completing energy addition.

At block 104, in the second operation state, audio is collected continuously to obtain an audio stream, speech recognition is performed on the audio stream to obtain a second control intent.

In an embodiment of the present disclosure, when the electronic device is in the second operation state, the electronic device may continuously collect the audio to obtain the audio stream, and perform speech recognition based on the audio stream. Thus, in the listening state of the electronic device, when the user interacts with the electronic device in real time or continuously, the user does not needs to input the wake word every time, and only needs to input the audio stream continuously, and speech recognition can be performed on the audio stream, such that the operation of the user can be simplified, and the user experience can be improved.

As an example, when the intelligent speaker is in the listening state, the user may continuously interact with the intelligent speaker without inputting the wake word frequently, and the electronic device may continuously collect the audio stream input by the user, and perform speech recognition on the audio stream. For example, the audio stream may include "changing equipment", purchasing equipment", etc.

At block 105, a second control instruction corresponding to the second control intent is performed when the second control intent matches the target scenario.

In an embodiment of the present disclosure, the second control intent may be preset based on the built-in program of the electronic device, or the second control intent may be set by the user, to improve the flexibility and applicability, which is not limited in the present disclosure. In an embodiment of the present disclosure, when the electronic device is in the second operation state, the electronic device may continuously collect the audio input by the user to obtain the audio stream, and perform speech recognition on the audio stream to obtain the second control intent, when the second control intent matches the target scenario, the control instruction matching the second control intent may be performed. For example, the target scenario is the game scenario, when the control intent obtained by recognizing the audio stream is "purchasing equipment", since "purchasing equipment" matches the game scenario, the electronic device may perform the control instruction matching "purchasing equipment".

In another possible condition, when the control intent does not match the target scenario, the electronic device will not perform operation. For example, the target scenario is the game scenario, when the control intent obtained by recognizing the audio stream is "how's the weather today", since the control intent does not match the game scenario, the electronic device will not perform operation. In this way, the user will not be interrupted during playing the game, and the user experience will be improved.

It should be noted that, the terms "first", "second" are merely used for descriptive purposes, and should not be understood as indicating or implying relative importance or the number of technical features indicated. Therefore, the features defined as "first" and "second" may explicitly or implicitly include at least one of the features.

With the speech control method according to the embodiment of the present disclosure, in the target scenario, the electronic device operates in the first operation state, and the audio clip is collected based on the wake word, speech recognition is performed on the audio clip to obtain the first control intent, the first control instruction matching the first control intent is performed, and the electronic device is controlled to switch from the first operation state to the second operation state. In the second operation state, the audio is collected continuously to obtain the audio stream, speech recognition is performed on the audio stream to obtain the second control intent, and when the second control intent matches the target scenario, the second control instruction matching the second control intent is performed. Thus, when the user continuously interacts with the electronic device, the audio stream may be recognized to obtain the second control intent, when the second control intent matches the target scenario, the second control instruction corresponding to the second control intent is performed, such that the user does not need to input the wake word frequently, the user's operation can be simplified, and user experience can be improved.

On the basis of the above embodiments, in an alternative implementation, when the electronic device is in the second operation state, the electronic device may continuously collect the audio to obtain the audio stream, perform speech recognition on the audio stream to obtain information stream, and obtain at least one candidate intent based on the information stream. Then, the electronic device may determine whether there is a candidate intent in the at least one candidate intent that matches the target scenario, when there is no candidate intent that matches the target scenario, the electronic device may quit the second operation state, and reject responding to the candidate intent that does not match the target scenario. Details will be descried with the following embodiments.

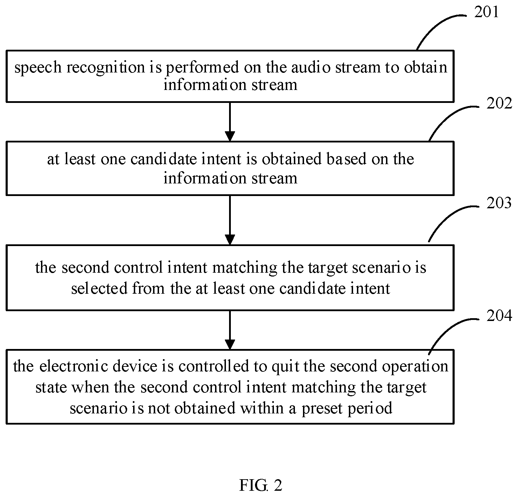

FIG. 2 is a flow chart illustrating a speech control method according to another embodiment of the present disclosure. As illustrated in FIG. 2, on the basis of the embodiments illustrated in FIG. 1, the speech control method may include the following actions.

At block 201, speech recognition is performed on the audio stream to obtain information stream.

In an embodiment of the present disclosure, after the user inputs the audio data, the electronic device may collect the audio stream, and perform speech recognition on the audio stream to obtain the information stream.

At block 202, at least one candidate intent is obtained based on the information stream.

In an embodiment of the present disclosure, after the information stream is obtained, semantic recognition may be performed on the information stream to obtain control intents corresponding to the information stream, and select at least one candidate intent from the control intents.

At block 203, the second control intent matching the target scenario is selected from the at least one candidate intent.

In an embodiment of the present disclosure, after the at least one candidate intent is obtained based on the information stream, the second control intent matching the target scenario may be selected from the at least one candidate intent. For example, when the target scenario is the game scenario, and the at least one candidate intent includes "playing a song", and "purchasing equipment", the candidate intent "purchasing equipment" that matches the game scenario may be selected.

In an embodiment of the present disclosure, when the candidate intent selected from the at least one candidate intent does not match the target scenario, the electronic device will not perform operation, such that the target scenario will not be interrupted, and the user can immerse himself/herself in the scenario.

As an example, when the target scenario is the game scenario, the at least one candidate intent obtained based on the information stream includes "playing a song", and "purchasing equipment", after selection, it may be determined that the candidate intent "playing a song" does not match the game scenario, the electronic device may not perform the control instruction corresponding to the candidate intent "playing a song", for example, the electronic device will not play the song. Thus, the user will not be interruptted during playing the game, so as to improve the user experience.

At block 204, the electronic device is controlled to quit the second operation state when the second control intent matching the target scenario is not obtained within a preset period. The preset period ranges from 20 seconds to 40 seconds.

In an embodiment of the present disclosure, the preset period may be preset based on the built-in program of the electronic device, or may be preset by the user, which is not limited in the present disclosure. For example, the preset period may range from 20s to 40s.

In an embodiment of the present disclosure, when the second control intent matching the target scenario is not selected within the preset period, it may indicate that the user does not want to continuously control the electronic device in the target scenario, and the electronic device may quit the second operation state. For example, when the preset period is 30s, and when the user does not input speech data within 30s, or the control intent matching the target scenario is not obtained within 30s, the electronic device may quit the listening state.

With the speech control method according to the embodiment of the present disclosure, speech recognition is performed on the audio stream to obtain information stream, at least one candidate intent is obtained based on the information stream, the second control intent matching the target scenario is selected from the at least one candidate intent, and when the second control intent is not obtained within the preset period, the electronic device is controlled to quit the second operation state. Thus, by controlling the electronic device to quit the second operation state when the control intent matching the target scenario is not obtained within the preset period, it can be avoided that the electronic device is always in the listening state, thereby reducing the energy consumption of electronic device.

In an embodiment of the present disclosure, after the first control intent is obtained, it may be determined whether the first control intent matches the target scenario, and the first control instruction matching the first control intent may be performed when the first control intent matches the target scenario, and then the electronic device may be controlled to switch from the first operation state to the second operation state, a first element may be replaced with a second element, and a third element may be displayed. Details will be descried with the following embodiments.

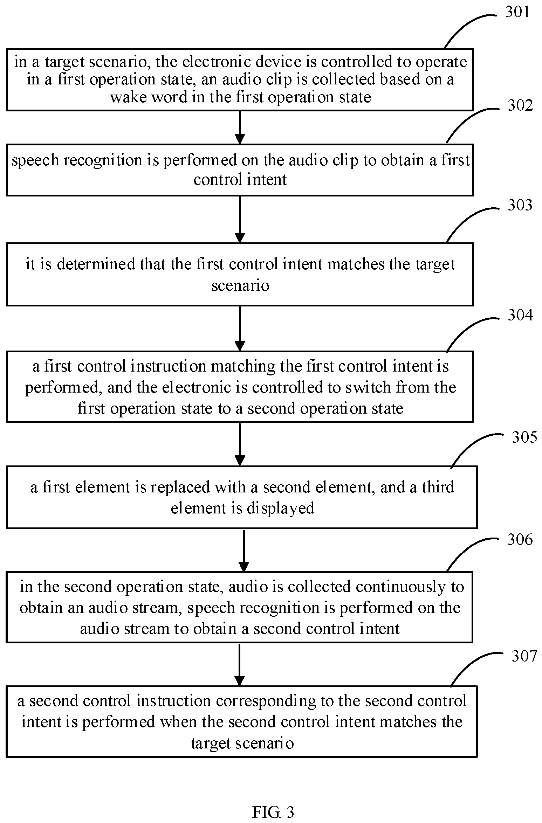

FIG. 3 is a flow chart illustrating a speech control method according to another embodiment of the present disclosure. As illustrated in FIG. 3, the speech control method may include the following actions.

At block 301, in a target scenario, the electronic device is controlled to operate in a first operation state, an audio clip is collected based on a wake word in the first operation state.

At block 302, speech recognition is performed on the audio clip to obtain a first control intent.

In an embodiment of the present disclosure, for details of blocks 301 and 302, reference may be made to the descriptions of blocks 101 and 102, which is not elaborated herein.

At block 303, it is determined that the first control intent matches the target scenario.

In an embodiment of the present disclosure, in the target scenario, when the electronic device is in the first operation state, the audio clip may be collected based on the wake word input by the user, and speech recognition may be performed on the audio clip to obtain the first control intent. Then, it may be determined whether the first control intent matches the target scenario, when the first control intent matches the target scenario, block 304 is performed, when the first control intent does not match the target scenario, the electronic device may reject to responding the first control intent, and not perform the control instruction corresponding to the first control intent, and the electronic device may still be in the first operation state.

For example, in the game scenario, when the control intent obtained by recognizing the audio clip input by the user after the wake word is "purchasing equipment", since "purchasing equipment" matches the game scenario, the electronic device may perform the control instruction matching "purchasing equipment".

At block 304, a first control instruction matching the first control intent is performed, and the electronic device is controlled to switch from the first operation state to a second operation state.

In an embodiment of the present disclosure, for details of block 304, reference may be made to the descriptions of block 103, which is not elaborated herein.

At block 305, a first element is replaced with a second element, and a third element is displayed.

In an implementation of the present disclosure, when the electronic device is in the second operation state, the first element in a display interface of the electronic device may be replaced with the second element, and the third element may be displayed. The first element may be configured to indicate that the electronic device is in the first operation, the second element may be configured to indicate that the electronic device is in the second operation, and the third element is configured to prompt inputting the wake word and/or broadcasting an audio or video.

In an embodiment, taking the target scenario is the game scenario as an example, when the electronic device is in the second operation state, i.e., the electronic device is in the listening state, for facilitating the user to obtain current state information of the electronic device, the first element in the display interface of the electronic device may be replaced with the second element. When the electronic device does not obtain the second control intent matching the target scenario, the electronic device may quit the second operation state, in this case, the user needs to input the wake word, the third element is displayed to prompt the user to input the wake word.

At block 306, in the second operation state, audio is collected continuously to obtain an audio stream, speech recognition is performed on the audio stream to obtain a second control intent.

At block 307, a second control instruction corresponding to the second control intent is performed when the second control intent matches the target scenario.

In an embodiment of the present disclosure, for details of blocks 306 and 307, reference may be made to the descriptions of blocks 104 and 105, which is not elaborated herein.

In an embodiment of the present disclosure, by replacing the first element in the display interface of the electronic device with the second element, and displaying the third element, the user can learn the current operation state of the electronic device, thereby improving the user experience.

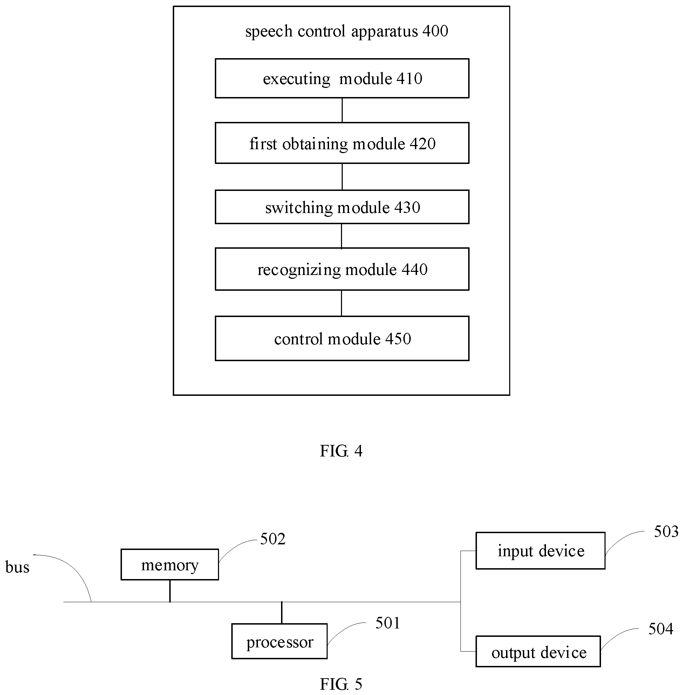

To implement the above embodiments, the present disclosure further provides a speech control apparatus. FIG. 4 is a block diagram illustrating a speech control apparatus 400 according to an embodiment of the present disclosure. As illustrated in FIG. 4, the speech control apparatus 400 includes an executing module 410, a first obtaining module 420, a switching module 430, a recognizing module 440, and a control module 450.

The executing module 410 is configured to, in a target scenario, control the electronic device to operate in a first operation state, and collect an audio clip based on a wake word in the first operation state. The first obtaining module 420 is configured to perform speech recognition on the audio clip to obtain a first control intent. The switching module 430 is configured to perform a first control instruction corresponding to the first control intent, and control the electronic device to switch from the first operation state to a second operation state. The recognizing module 440 is configured to, in the second operation state, continuously collect audio to obtain an audio stream, and perform speech recognition on the audio stream to obtain a second control intent. The control module 450 is configured to perform a second control instruction corresponding to the second control intent when the second control intent matches the target scenario.

Further, the speech control apparatus 400 may also include a second obtaining module, a third obtaining module, a selecting module, and a quitting module.

The second obtaining module is configured to perform speech recognition on the audio stream to obtain information stream. The third obtaining module is configured to obtain at least one candidate intents based on the information stream. The selecting module is configured to perform a second control instruction corresponding to the second control intent when the second control intent matches the target scenario. The quitting module is configured to control the electronic device to quit the second operation state when the second control intent matching the target scenario is not obtained within a preset period. The preset period ranges from 20 seconds to 40 seconds.

In another possible implementation of embodiments of the present disclosure, the speech control apparatus 400 may also include a reject response module. The reject response module may be configured to control the electronic device to reject responding to the candidate intent that does not match the target scenario.

In another possible implementation of embodiments of the present disclosure, the speech control apparatus 400 may also include a replacing module. The replacing module is configured to replace a first element with a second element, and to display a third element. The first element is configured to indicate that the electronic device is in the first operation state, the second element is configured to indicate that the electronic device is in the second operation state, and the third element is configured to prompt inputting the wake word and/or broadcasting an audio or video.

In another possible implementation of embodiments of the present disclosure, the speech control apparatus 400 may also include a determining module. The determining module is configured to determine that the first control intent matches the target scenario.

In another possible implementation of embodiments of the present disclosure, the target scenario includes a game scenario.

It should be noted that, the above descriptions for the speech control method according to embodiments of the present disclosure may also be applicable the speech control apparatus, which is not elaborated herein.

With the speech control apparatus according to embodiments of the present disclosure, in the target scenario, the electronic device operates in the first operation state, and the audio clip is collected based on the wake word, speech recognition is performed on the audio clip to obtain the first control intent, the first control instruction matching the first control intent is performed, and the electronic device is controlled to switch from the first operation state to the second operation state. In the second operation state, the audio is collected continuously to obtain the audio stream, speech recognition is performed on the audio stream to obtain the second control intent, and when the second control intent matches the target scenario, the second control instruction matching the second control intent is performed. Thus, when the user continuously interacts with the electronic device, the audio stream may be recognized to obtain the second control intent, when the second control intent matches the target scenario, the second control instruction corresponding to the second control intent is performed, such that the user does not need to input the wake word frequently, the user's operation can be simplified, and user experience can be improved.

To implement the above embodiments, the present disclosure further provides an electronic device. The device includes at least one processor and a memory. The memory is store executable instructions, and coupled to the at least one processor. When the instructions are executed by the at least one processor, the at least one processor is caused to execute the speech control method according to embodiments of the present disclosure.

To implement the above embodiments, the present disclosure further provides a non-transitory computer readable storage medium having computer instructions stored thereon. When the computer instructions are executed by a processor, the processor is caused to execute the speech control method according to embodiments of the present disclosure.

According to embodiments of the present disclosure, the present disclosure also provides an electronic device and a readable storage medium. FIG. 5 is a block diagram illustrating an electronic device according to an embodiment of the present disclosure.

As illustrated in FIG. 5, the electronic device is intended to represent various forms of digital computers, such as laptop computers, desktop computers, workbenches, personal digital assistants, servers, blade servers, mainframe computers, and other suitable computers. The electronic device may also include various forms of mobile devices, such as personal digital assistant, cellular phones, intelligent phones, wearable devices, and the like. The components illustrated, the connections and relationships of the components, and functions of the components are merely examples and are not intended to limit the implementation of the present disclosure.

As illustrated in FIG. 5, the electronic device includes: one or more processors 501, a memory 502, and interfaces (including high-speed interfaces and low-speed interfaces) connecting respective components. The components are coupled via different buses, and may be installed in a public motherboard or may be installed in other ways based on needs. The processor may process instructions executed in the electronic device, including instructions stored in the memory or instructions on the memory for displaying image information of a graphical user interface (GUI) in the external input/output devices (such as a display device coupled to an interface). In other implementation, multiple processors and/or multiple buses may be used with multiple memories and multiple storage mediums if needed. Similarly, multiple electronic devices may be connected, each of which provides parts of necessary operations (for example, as a server array, a group of blade servers, or a multiprocessor system). FIG. 5 takes the processor 501 as an example.

The memory 502 may be a non-transitory computer-readable storage medium. The memory stores instructions executable by at least one processor, such that the at least one processor can execute the speech control method of the present disclosure. The non-transitory computer-readable storage medium may include computer instructions, when the computer instructions are executed by a processor, the processor may be caused to execute the speech control method according to the present disclosure.

As a non-transitory computer-readable storage medium, the memory 502 may be used to store non-transitory software programs, non-transitory computer executable programs, and modules, such as program instructions/modules corresponding to the speech control method in embodiments of the present disclosure (such as, the executing module 410, the first obtaining module 420, the switching module 430, the recognizing module 440, and the control module 450 illustrated in FIG. 4). The processor 501 may execute various functional applications and data processing of the server by running non-transitory software programs, instructions, and modules stored in the memory 502, to implement the speech control method according to embodiments of the present disclosure.

The memory 502 may include a program storage area and a data storage area. The program storage area may store the operating system and applications required for at least one function. The data storage area may store data created during use of the electronic device. In addition, the memory 502 may include a high-speed random-access memory and a non-transitory memory, such as at least one magnetic disk storage device, flash memory device, or other non-transitory solid-state storage device. In some embodiments, the memory 502 alternatively includes memories set remotely relative to the processor 501. These remote memories may be connected to the electronic device via network. Examples of the network include, but are not limited to, Internet, an intranet, a local area network, a mobile communication network, and combinations thereof.

The electronic device may further include: an input device 503 and an output device 504. The processor 501, the memory 502, the input device 503 and the output device 504 may be connected via a bus or in other way. In FIG. 5, as an example, the components are connected via the bus.

The input device 503 may receive inputted numbers or character information, and generate key signal inputs related to user settings and function control of the electronic device. Example of the input device 503 may include such as a touch screen, a keypad, a mouse, a trackpad, a touchpad, a pointing stick, one or more mouse buttons, trackballs, joysticks and the like. The output device 504 may include a display device, an auxiliary lighting apparatus (such as, a light emitting diode LED), and a touch feedback apparatus (such as, a vibration motor). The display device may include, but is not limited to, a liquid crystal display (LCD), a LED display, and a plasma display. In some embodiments, the display device may be a touch screen.

Various implementations of the system and technology described herein may be implemented in digital electronic circuit systems, integrated circuit systems, application-specific integrated circuits (ASICs), computer hardware, firmware, software, and/or combinations thereof. These implementations may include: implementing in one or more computer programs. The one or more computer programs may be executed and/or interpreted on a programmable system including at least one programmable processor. The programmable processor may be a dedicated or general-purpose programmable processor, which may receive data and instructions from a storage system, at least one input device and at least one output device, and transmit the data and the instructions to the storage system, the at least one input device and the at least one output device.

These computing programs (also called as programs, software, software applications, or codes) include machine instructions of the programmable processor, and may utilize high-level procedural and/or object-oriented programming languages, and/or assembly/machine languages to implement these computing programs. As used herein, the terms "machine-readable medium" and "computer-readable medium" refer to provide machine instructions and/or data for any computer program product, device, and/or apparatus (such as, magnetic disks, optical disks, memories, programmable logic devices (PLDs) of the programmable processor, including: machine-readable media receiving machine instructions of machine-readable signals. The term "machine-readable signal" refers to any signal used to provide machine instructions and/or data for the programmable processor.

In order to provide interaction for the user, the system and technology described herein may be implemented on a computer. The computer has a display apparatus (such as, a CRT (cathode ray tube) or a LCD monitor) for displaying information to the user; and a keyboard and a pointing apparatus (such as a mouse or trackball). The user may provide input for the computer though the keyboard and the pointing apparatus. Other kinds of apparatus may also be used to provide interaction for the user. For example, the feedback provided for the user may be any form of sensory feedback (such as, visual feedback, auditory feedback, or haptic feedback); and input may be received from the user in any form (including acoustic input, speech input, or tactile input).

The system and technology described herein may be implemented in a computing system including back-end components (such as, a data server), a computing system including middleware components (such as, application servers), a computing system including front-end components (such as, a user computer with a graphical user interface or a web browser, through which the user may interact with implementations of the system and technology described herein), or a computing system including any combination of such back-end components, middleware components, and front-end components. The components of the system may be interconnected by any form or medium of digital data communication (such as, a communication network). The communication network includes, such as, a local area network (LAN), a wide area network (WAN), and the Internet.

The computer system may include a client and a server. The client and the server are generally remote from each other and typically interact through the communication network. A client-server relationship is generated by running computer programs having the client-server relationship with each other on the respective computers.

With the technical solution of embodiments of the present disclosure, in the target scenario, the electronic device operates in the first operation state, and the audio clip is collected based on the wake word, speech recognition is performed on the audio clip to obtain the first control intent, the first control instruction matching the first control intent is performed, and the electronic device is controlled to switch from the first operation state to the second operation state. In the second operation state, the audio is collected continuously to obtain the audio stream, speech recognition is performed on the audio stream to obtain the second control intent, and when the second control intent matches the target scenario, the second control instruction matching the second control intent is performed. Thus, when the user continuously interacts with the electronic device, the audio stream input by the user may be recognized to obtain the second control intent, when the second control intent matches the target scenario, the second control instruction corresponding to the second control intent is performed, such that the user does not need to input the wake word frequently, the user's operation can be simplified, and user experience can be improved.

The various forms of processes shown above may be reordered, added, or deleted. For example, the actions at respective blocks may be performed in parallel, sequentially, or in different orders. As long as the desired results of the technical solutions disclosed in the present disclosure may be achieved, there is no limitation herein.

The above detailed implementations do not constitute a limitation on the protection scope of the present disclosure. The skilled in the art should understand that, various modifications, combinations, sub-combinations, and substitutions may be made based on design requirements and other factors. Any modification, equivalent replacement and improvement made within the spirit and principles of the present disclosure shall be included in the protection scope of the present disclosure.

## Claims

1. A speech control method, applied to an electronic device, and comprising:
in a target scenario, controlling the electronic device to operate in a first operation state, and collecting an audio clip based on a wake word in the first operation state (101,301);
performing speech recognition on the audio clip to obtain a first control intent (102, 302);
performing a first control instruction corresponding to the first control intent, and controlling the electronic device to switch from the first operation state to a second operation state (103, 303);
in the second operation state, continuously collecting audio to obtain an audio stream, and performing speech recognition on the audio stream to obtain a second control intent (104, 306); and
performing a second control instruction corresponding to the second control intent when the second control intent matches the target scenario (105, 307).

2. The speech control method of claim 1, after continuously collecting audio to obtain the audio stream, and performing speech recognition on the audio stream to obtain the second control intent, further comprising:
performing speech recognition on the audio stream to obtain information stream (201);
obtaining at least one candidate intent based on the information stream (202);
selecting the second control intent matching the target scenario from the at least one candidate intent (203); and
controlling the electronic device to quit the second operation state when the second control intent matching the target scenario is not obtained within a preset period (204), the preset period ranging from 20 seconds to 40 seconds.

3. The speech control method of claim 2, after obtaining the at least one candidate intent based on the information stream, further comprising:
controlling the electronic device to reject responding to the candidate intent that does not match the target scenario.

4. The speech control method of any of claims 1-3, wherein controlling the electronic device to switch from the first operation state to the second operation state comprises:
replacing a first element with a second element, and displaying a third element, wherein the first element is configured to indicate that the electronic device is in the first operation state, the second element is configured to indicate that the electronic device is in the second operation state, and the third element is configured to prompt inputting the wake word and/or broadcasting an audio or video.

5. The speech control method of any of claims 1-4, before controlling the electronic device to switch from the first operation state to the second operation state, further comprising:
determining that the first control intent matches the target scenario.

6. The speech control method of any of claims 1-5, wherein the target scenario comprises a game scenario.

7. A speech control apparatus, applied to an electronic device, and comprising:
an executing module (410), configured to, in a target scenario, control the electronic device to operate in a first operation state, and collect an audio clip based on a wake word in the first operation state;
a first obtaining module (420), configured to perform speech recognition on the audio clip to obtain a first control intent;
a switching module (430), configured to perform a first control instruction corresponding to the first control intent, and control the electronic device to switch from the first operation state to a second operation state;
a recognizing module (440), configured to, in the second operation state, continuously collect audio to obtain an audio stream, and perform speech recognition on the audio stream to obtain a second control intent; and
a control module (450), configured to perform a second control instruction corresponding to the second control intent when the second control intent matches the target scenario.

8. The speech control apparatus of claim 7, further comprising:
a second obtaining module, configured to perform speech recognition on the audio stream to obtain information stream;
a third obtaining module, configured to obtain at least one candidate intents based on the information stream;
a selecting module, configured to select the second control intent matching the control intent of the target scenario from the at least one candidate intents; and
a quitting module, configured to control the electronic device to quit the second operation state when the second control intent matching the target scenario is not obtained within a preset period, the preset period ranging from 20 seconds to 40 seconds.

9. The speech control apparatus of claim 8, further comprising:
a reject response module, configured to control the electronic device to reject responding to the candidate intent that does not match the target scenario.

10. The speech control apparatus of any of claims 7-9, further comprising:
a replacing module, configured to replace a first element with a second element, and display a third element, wherein the first element is configured to indicate that the electronic device is in the first operation state, the second element is configured to indicate that the electronic device is in the second operation state, and the third element is configured to prompt inputting the wake word and/or broadcasting an audio or video.

11. The speech control apparatus of any of claims 7-10, further comprising:
a determining module, configured to determine that the first control intent matches the target scenario.

12. The speech control apparatus of any of claims 7-11, wherein the target scenario comprises a game scenario.

13. An electronic device, comprising:
at least one processor; and
a memory, configured to store executable instructions, and coupled to the at least one processor;
wherein when the instructions are executed by the at least one processor, the at least one processor is caused to execute the speech control method according to any one of claims 1-6.

14. A non-transitory computer readable storage medium having computer instructions stored thereon, wherein when the computer instructions are executed by a processor, the processor is caused execute the speech control method according to any one of claims 1-6.
